# FASCICULE DE BREVET EUROPEEN

(11) **EP 1 564 876 B1**
(45) Date de publication et mention de la délivrance du brevet: **29.09.2010**
(21) Numéro de dépôt: 05300092.3
(22) Date de dépôt: 04.02.2005
(51) Int. Cl.: H02M 3/337

(54) **Poste de soudage à onduleur quasi résonnant à commutation douce**
Schweisseinrichtung mit sanfschaltendem Quasi-resonanzwechselrichter
Welding unit with soft switching quasi-resonant inverter

(30) Priorité: 12.02.2004 FR 0450250
(43) Date de publication de la demande: 17.08.2005
(73) Titulaire: AIR LIQUIDE WELDING FRANCE, 75007 Paris (FR); L'AIR LIQUIDE, Société Anonyme pour l'Etude et l'Exploitation des Procédés Georges Claude, 75007 Paris (FR)
(72) Inventeur: Coulibaly, Peyofougou, 95310, Saint Ouen L'Aumone (FR)
(74) Mandataire: Pittis, Olivier

(56) Documents cités:
- EP-A- 0 602 495
- US-A- 6 016 258
- TAKANO H ET AL: "Auxiliary resonant commutated soft-switching inverter with bidirectional active switches and voltage clamping diodes" CONFERENCE RECORD OF THE 2001 IEEE INDUSTRY APPLICATIONS CONFERENCE. 36TH IAS ANNUAL MEETING . CHICAGO, IL, SEPT. 30 - OCT. 4, 2001, CONFERENCE RECORD OF THE IEEE INDUSTRY APPLICATIONS CONFERENCE. IAS ANNUAL MEETING, NEW YORK, NY : IEEE, US, vol. VOL. 1 OF 4. CONF. 36, 30 septembre 2001 (2001-09-30), pages 1441-1446, XP010561884 ISBN: 0-7803-7114-3
- THERON P C ET AL: "Heavy duty inverter welders with high overvoltage immunity" AFRICON, 1996., IEEE AFRICON 4TH STELLENBOSCH, SOUTH AFRICA 24-27 SEPT. 1996, NEW YORK, NY, USA,IEEE, US, vol. 1, 24 septembre 1996 (1996-09-24), pages 221-225, XP010208026 ISBN: 0-7803-3019-6
- JOVANOVIC M.M. ET AL: 'zero-voltage-switching technique in high-frequency off-line converters' CONFERENCE PROCEEDINGS ARTICLE 01 Février 1988, pages 23 - 32, XP010070070

## Description

La présente invention concerne un poste de soudage à l'arc électrique comportant un onduleur de type dit « quasi-résonant à commutation douce ».

II existe aujourd'hui dans le domaine de l'électronique dit « électronique de puissance », des onduleurs permettant de délivrer des tensions de sortie continues qui fonctionnent selon un principe dit « de commutation douce ».

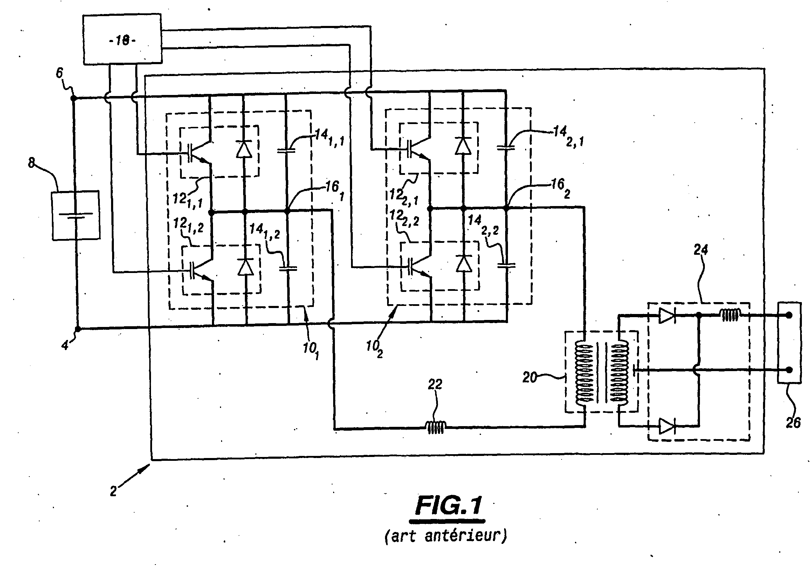

Le schéma électrique d'un tel onduleur connu, de type quasi-résonant à commutation douce est représenté en référence à la figure 1 dans une configuration fonctionnelle.

Cet onduleur 2 est raccordé entre une borne de référence 4 et une borne d'alimentation 6 d'une source de tension continue 8.

Des cellules ou bras de commutation (dits « legs » en anglais) désignés de manière générale par la référence numérique 10 et de manière particulière par les références 10₁ et 10₂, sont disposés en parallèle entre les bornes 4 et 6 de la source de tension 8. Ces cellules 10 comportent chacune deux interrupteurs reliés en série entre les bornes 4 et 6. Les interrupteurs sont désignés de manière générale par la référence numérique 12 et de manière particulière par les références 12_{1,1}, 12_{1,2}, 12_{2,1}, 12_{2,2.}

Chaque interrupteur 12 est formé de manière classique d'un ou de plusieurs thyristors ou transistors commandables, aux bornes desquels des diodes sont montées en anti-parallèle.

De plus, chaque interrupteur 12 de chaque cellule de commutation 10, est également monté en parallèle avec un élément capacitif d'aide à la commutation, désigné de manière générale par la référence numérique 14 et de manière particulière par les références numériques 14_{1,1,} 14_{1,2}, 14_{2,1}, 14_{2,2}.

Les cellules de commutation 10₁ et 10₂ présentent ainsi chacune une borne de sortie 16₁ et 16₂ prise entre les deux interrupteurs centraux de chaque cellule.

Par ailleurs, chaque interrupteur 12 de chaque cellule 10 est relié pour sa commande à un dispositif de commande 18 extérieur à l'onduleur 2.

L'onduleur 2 comporte également un transformateur 20 dont le primaire est relié en série entre les deux bornes de sortie 16₁ et 16₂ des cellules de commutation 10₁ et 10₂.

De plus, un élément inductif 22 est relié en série entre le primaire du transformateur et la borne de sortie 16₁ de la cellule 10₁ afin de former un élément résonant.

Le secondaire du transformateur 20 est quant à lui relié à un redresseur 24 dont les bornes de sortie 26 forment la sortie de l'onduleur 2.

Le fonctionnement et la commande d'un tel circuit sont connus de l'état de l'art.

Le dispositif de commande 18 délivre uniquement des commandes de blocage aux différents interrupteurs 12. La commutation d'un état bloqué à un état passant est réalisée de manière spontanée à tension nulle selon le principe de la commutation douce quasi-résonnante, lors de la réception d'une autorisation de commutation émise par le dispositif de commande 18.

En effet, l'énergie réactive stockée dans les éléments de résonance, soit les éléments capacitifs 14 et l'élément inductif 22, auxquels se rajoutent éventuellement les capacités parasites des interrupteurs 12 et l'inductance de fuite du transformateur 20, permet d'obtenir spontanément au niveau des bornes de sortie 16 des cellules 20 des conditions permettant la commutation de l'état bloqué vers l'état passant correspondant à une commutation douce.

Dans le cadre de la quasi-résonance, les phases de résonance permettant la commutation sont de durée très courte à l'échelle de la fréquence de découpage de l'onduleur, telles que par exemple de l'ordre de 1/10 de cette période.

De tels circuits présentent un nombre important d'avantages par rapport à des onduleurs à résonance et/ou à amorçage et blocage commandés.

Cependant, ces circuits sont limités au niveau de la plage de fonctionnement et notamment au niveau des variations de l'amplitude du courant de sortie.

En effet, en dessous d'un courant limite, les éléments capacitifs 14 de résonance se déchargent trop lentement, de sorte que les conditions d'amorçage spontané des cellules de commutation 10 ne sont pas réunies. L'onduleur ne fonctionne donc pas en dessous de ce courant limite.

Ceci peut poser d'importants problèmes, notamment dans le cadre d'applications à des postes de soudage qui requièrent des courants dont l'intensité varie sur l'ensemble d'une plage de fonctionnement s'étendant par exemple de 10 à 500 ampères pour une tension de 50 volts.

Il existe des onduleurs pourvus de circuits auxiliaires permettant de résoudre ce problème.

Cependant, ces circuits auxiliaires sont complexes et utilisent un nombre important d'interrupteurs, ce qui nécessite le développement de circuits de commande supplémentaires.

De plus, dans le cadre d'une commutation douce, de tels circuits sont placés au niveau du secondaire du transformateur de l'onduleur, ce qui en limite les utilisations. Notamment, l'utilisation de circuits auxiliaires au niveau du secondaire est moins aisée dans le cadre des postes de soudage.

Par ailleurs, on connaît le document EP-A-602495 qui décrit un onduleur du type à résonance complète pour poste de soudage, incorporant un redresseur d'intensité de courant avec capacité en sortie de redresseur. Il comporte en outre un moyen de pilotage (driver) à basculement lorsque la valeur d'intensité devient nulle.

En outre, le document US-A-6 016 258 décrit un convertisseur DC-DC à condensateurs à basculement lors d'une tension nulle, alors que la publication de Tanako et al, Auxiliary Resonant Commutated Soft-Switching Inverter with Bidirectionnal Active switches and Voltage Clamping Diodes, IEEE 2001, p. 1441-1446, propose un onduleur de type à résonance totale pour appareil à rayon X.

Le problème qui se pose est donc qu'il n'existe pas aujourd'hui d'onduleur de type quasi-résonant à commutation douce permettant de délivrer un courant de sortie sur l'ensemble d'une plage de fonctionnement, lorsqu'il est intégré dans un poste ou générateur de courant de soudage.

La solution de l'invention est alors un poste de soudage selon la revendication 1, caractérisé en ce qu'il comporte un onduleur de type quasi résonnant à commutation douce comportant des moyens de raccordement à une source d'alimentation en énergie électrique comportant une borne d'alimentation en tension continue et une borne de référence, l'onduleur comprenant deux cellules de commutation de type quasi résonnant, chacune comportant un nombre pair d'interrupteurs connectés en série entre lesdites bornes d'alimentation et de référence et comportant une borne de sortie prise entre les deux interrupteurs centraux de ladite cellule, chaque interrupteur étant connecté en parallèle à un élément capacitif et en série à un élément inductif formant éléments de résonance, l'onduleur comprenant en outre des moyens de raccordement à un circuit de commande desdits interrupteurs et un transformateur dont l'élément primaire est relié auxdites bornes de sortie des cellules de commutation et dont le secondaire est relié et à un redresseur délivrant une tension continue de sortie d'onduleur, et au moins une borne intermédiaire d'alimentation prise à un potentiel moitié de la différence de potentiel présente entre lesdites bornes d'alimentation en tension continue et de référence, la borne de sortie de chaque cellule de commutation étant reliée à une borne intermédiaire d'alimentation par l'intermédiaire d'un élément inductif connecté en série et l'onduleur comporte deux diodes montées en parallèle entre les bornes d'alimentation et de référence.

L'utilisation du circuit de l'invention permet donc d'obtenir un poste à un onduleur de type quasi-résonant à commutation douce, d'une complexité non supérieure à celle des circuits existants, recevant le même type et le même nombre de signaux de commande et permettant d'obtenir un courant de sortie dont l'intensité varie sur l'intégralité de la plage de fonctionnement de l'onduleur.

Selon le cas, le poste de l'invention peut comprendre l'une ou plusieurs des caractéristiques suivantes :
- l'onduleur comporte deux cellules de commutation disposées en parallèle, la borne de sortie de chacune desdites deux cellules étant reliée chacune à une borne intermédiaire d'alimentation par l'intermédiaire d'un élément inductif distinct, et ledit élément primaire dudit transformateur étant relié en série entre lesdites deux bornes de sortie desdites deux cellules de commutation ;
- l'onduleur comporte deux bornes intermédiaires d'alimentation chacune reliée à une borne de sortie d'une cellule de commutation par un élément inductif distinct ;
- l'onduleur comporte deux diviseurs capacitifs formés d'un nombre pair d'éléments capacitifs disposés en série entre lesdites bornes d'alimentation et de référence, chaque diviseur capacitif comportant une borne prise entre les deux éléments capacitifs centraux et formant borne intermédiaire d'alimentation ;
- un montage tête-bêche de deux thyristors à gâchette est disposé en série entre chaque borne intermédiaire d'alimentation et chaque borne de sortie d'une cellule de commutation, ledit onduleur étant également relié à un dispositif de commande desdits thyristors à gâchette ;
- l'onduleur comprend un élément inductif disposé en série avec le primaire dudit transformateur ;
- ledit transformateur est un transformateur planar couplé comprenant deux éléments en série au primaire et deux éléments en parallèle au secondaire.
- il comporte une source de tension continue à laquelle est relié un onduleur dont les bornes de sortie forment bornes de soudage, ledit poste de soudage comportant également des moyens d'entrée d'une consigne de soudage et des moyens de commande dudit onduleur.

L'invention sera mieux comprise à la lecture de la description qui va suivre, donnée uniquement à titre d'exemple et faite en se référant aux dessins annexés, sur lesquels :
- la Fig.1 dont il a déjà été fait mention, représente un circuit électrique d'un onduleur de type quasi-résonant à commutation douce, de l'état de l'art ;
- la Fig.2 représente un schéma électrique d'un onduleur de type quasi-résonant à commutation douce pour poste de soudage selon l'invention ;
- les Figs.3A à 3F représentent le circuit de la figure 2 dans différentes phases de fonctionnement ;
- la Fig.4 représente un chronogramme de différents signaux au cours du fonctionnement de l'onduleur décrit en référence à la figure 2 ;
- la Fig.5 représente une variante d'une partie du circuit de la figure 2 ; et
- la Fig.6 représente un schéma synoptique d'un poste de soudage à un onduleur selon l'invention.

Dans la suite du texte, un ensemble de composants de même nature est désigné à l'aide d'une unique référence numérique générale tandis que chaque composant de cet ensemble est désigné à l'aide de cette référence numérique avec un indice. Ces indices sont attribués selon une notation matricielle, l'utilisation de deux indices séparés par une virgule correspondant à des numéros de colonne et de ligne dans cet ordre.

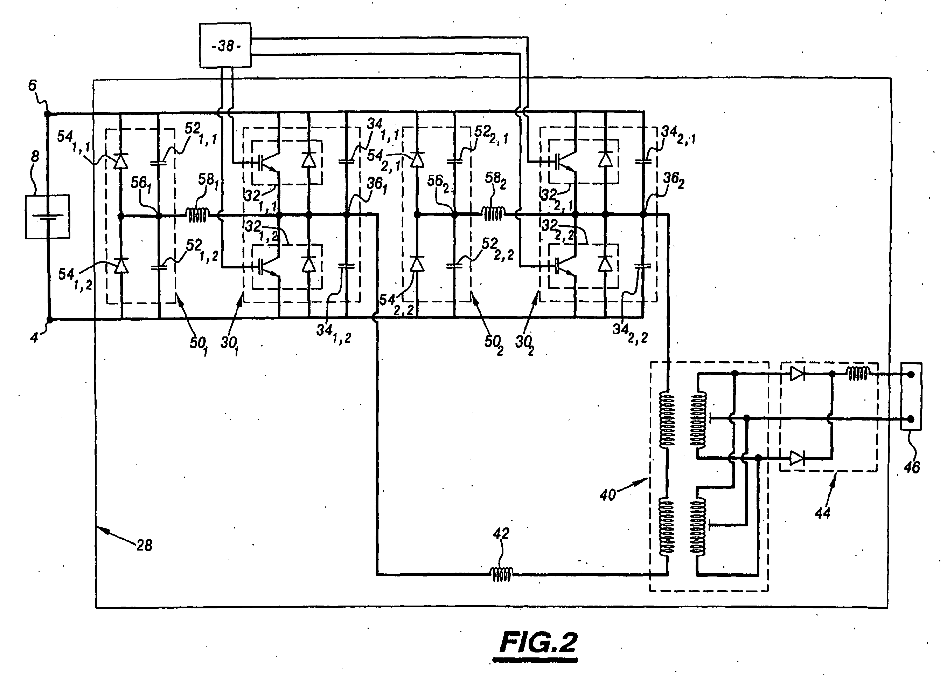

Sur la figure 2, on a représenté le circuit électrique d'un premier mode de réalisation d'un onduleur 28 pour poste de soudage selon l'invention.

Cet onduleur 28 est raccordé entre les bornes 4 de référence et 6 d'alimentation, de la source de tension continue 8 telle que définie précédemment en référence à la figure 1. Dans l'exemple, la source de tension 8 délivre une tension continue de 600 volts.

L'onduleur 28 comporte deux cellules ou bras de commutation 30₁ et 30₂, disposées en parallèle entre les bornes 4 et 6 et comportant chacune deux interrupteurs reliés en série entre les bornes 4 et 6. Ces interrupteurs sont désignés de manière générale par la référence numérique 32 et de manière particulière par les références 32_{1,1}, 32_{1,2}, 32_{2,1} et 32_{2,2}.

Les interrupteurs 32 sont chacun disposés également en parallèle avec un élément capacitif 34 d'aide à la commutation et formant élément de résonance.

Par exemple, les interrupteurs 32 sont des interrupteurs de type dit IGBT ou MOSFET tels que par exemple les composants désignés IXKN45N80C. Les éléments capacitifs 34 sont des capacités de 2,2 nano-Farads (nF).

La cellule de commutation 30₁ présente une borne de sortie 36₁ entre les deux interrupteurs 32_{1,1}, 32_{1,2} et la cellule de commutation 30₂ présente une borne de sortie 36₂ entre les interrupteurs 32_{2,1}, 32_{2,2}.

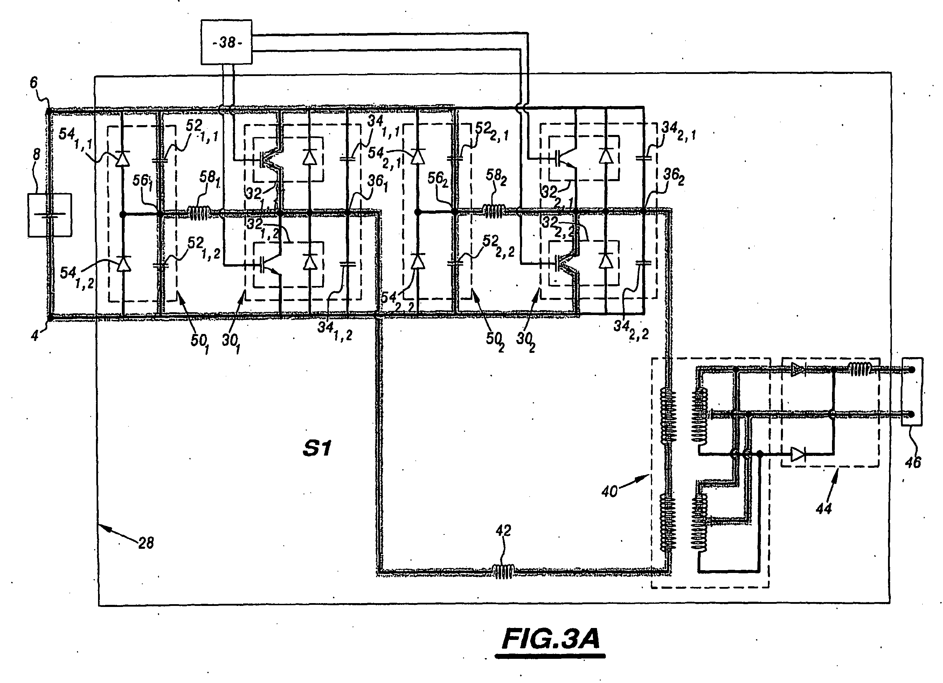

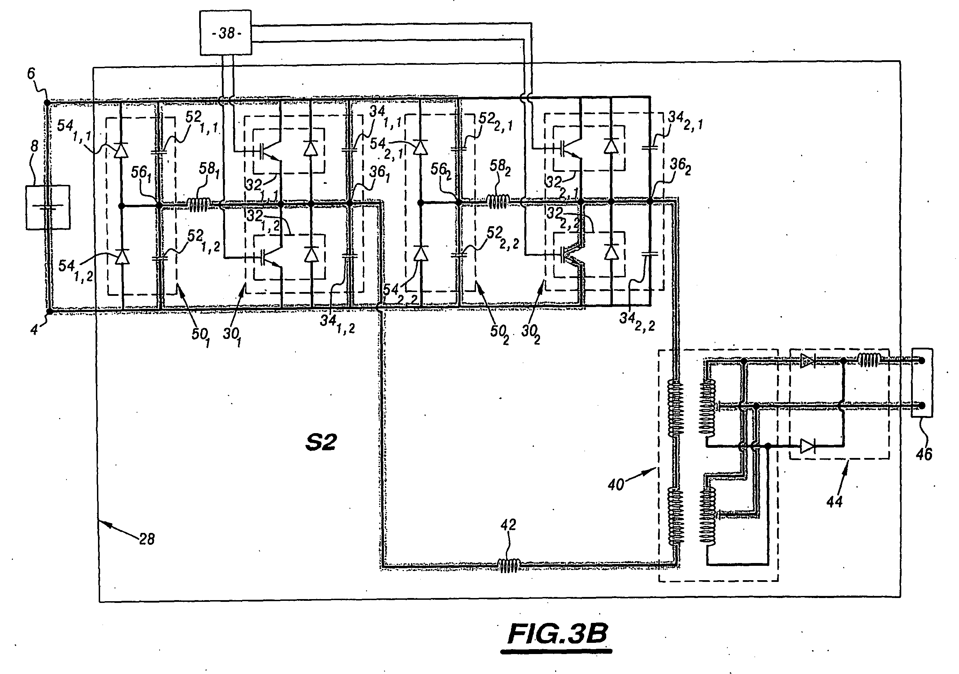

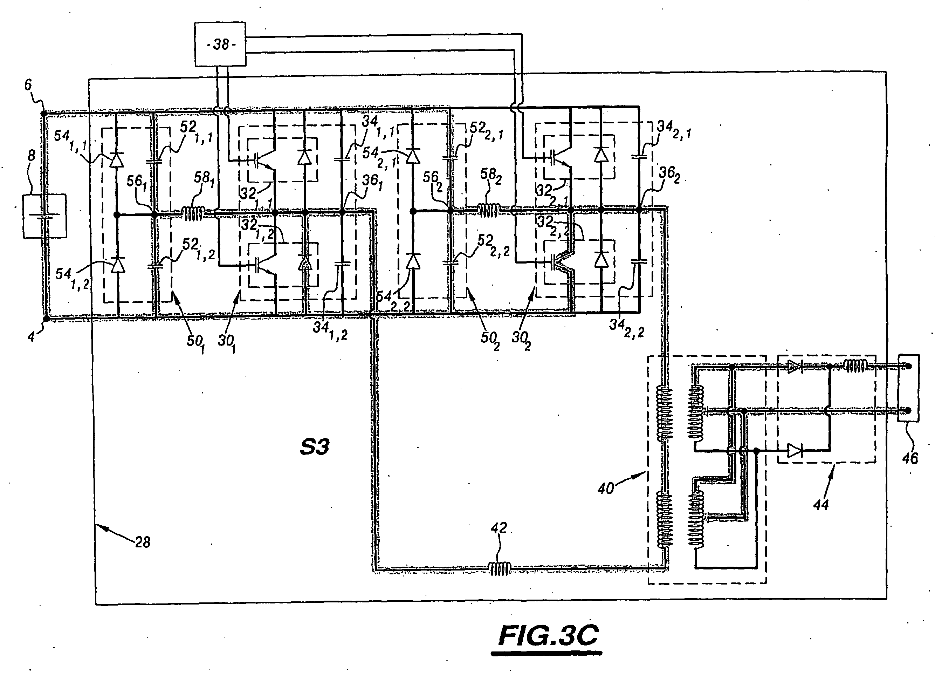

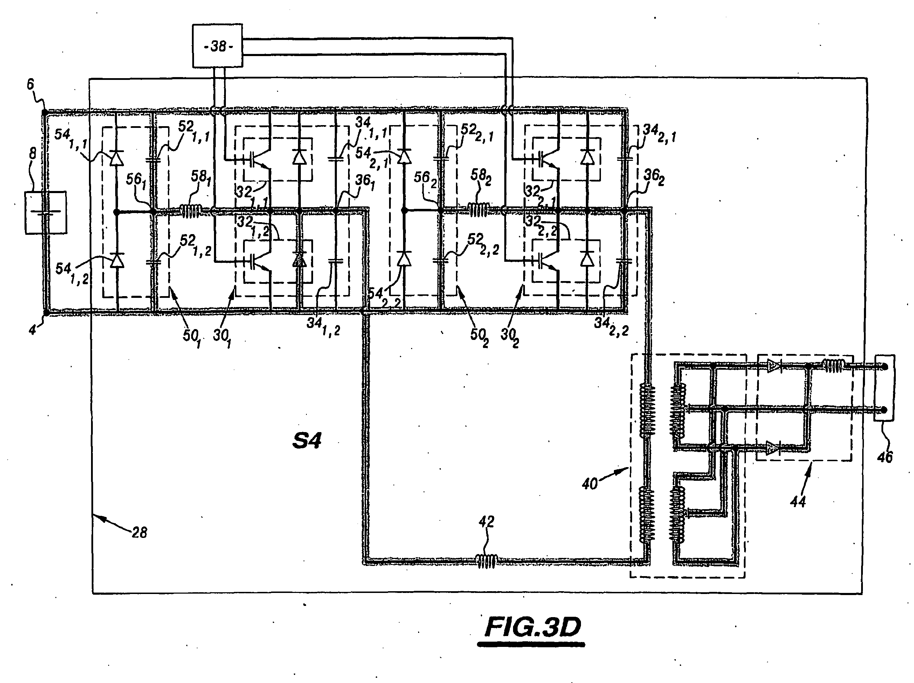

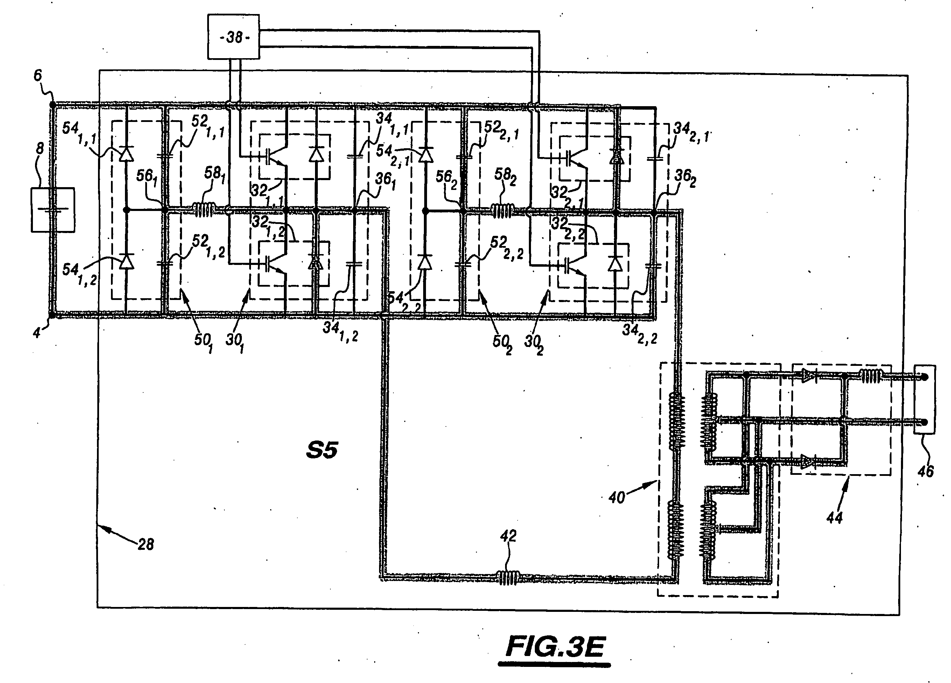

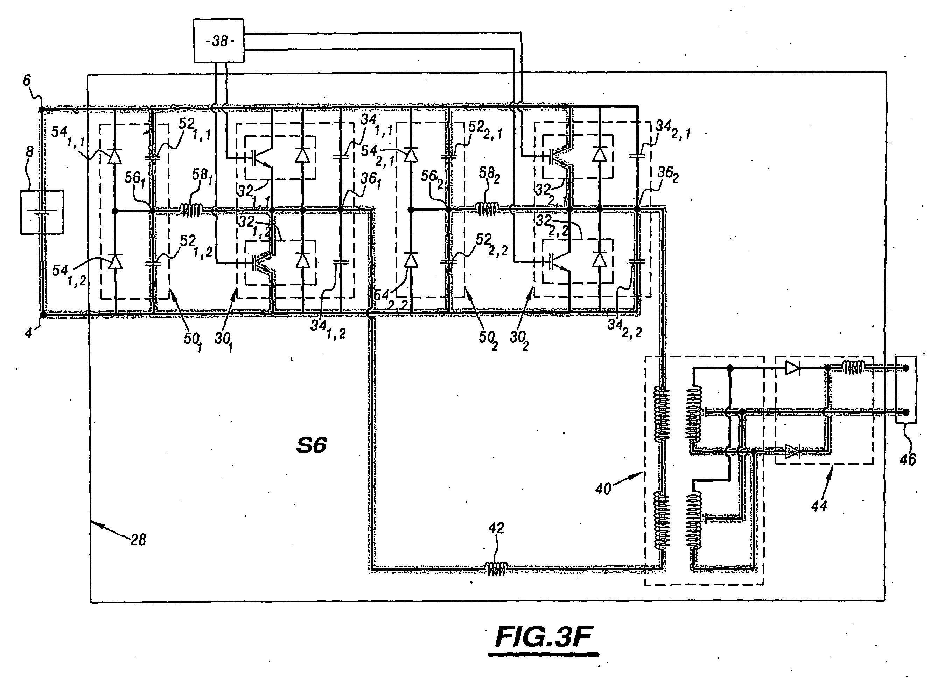

Les interrupteurs 32 sont chacun commandés par un dispositif de commande 38 extérieur à l'onduleur 28 et adapté pour une commande forcée de blocage des interrupteurs 32 et leur amorçage spontané. Une telle commande est réalisée de manière classique et sera décrite plus en détails ultérieurement en référence aux figures 3A à 3F.

L'onduleur 28 comporte également un transformateur 40 dont le primaire est relié en série entre les sorties 36₁ et 36₂ des deux cellules de commutation 30.

Dans le mode de réalisation décrit, le transformateur 40 est un transformateur planar couplé de deux fois 10,5 kW, les bobines du primaire étant en série et les bobines du secondaire étant en parallèle.

Un tel transformateur est classique dans le domaine de l'électronique de puissance et ne sera pas décrit plus en détail.

L'onduleur 28 comporte également un élément inductif 42 disposé en série entre la borne de sortie 36₁ de la première cellule de commutation 30₁ et le primaire du transformateur 40.

Dans l'exemple, l'élément inductif 42 est une inductance de 3 micro-Henry (µH).

Le secondaire du transformateur 40 est reliée à un redresseur 44 de type classique utilisant des diodes DSEP 2x101 (400 volts de deux fois 100 A), et une inductance de 5 µH.

Les bornes de sortie du redresseur 44 forment directement les bornes de sortie de l'onduleur 28 et sont désignées par la référence 46.

Par ailleurs, l'onduleur 28 comporte deux diviseurs capacitifs 50₁ et 50₂ disposés en parallèle entre les bornes d'alimentation 6 et de référence 4 de la source de tension continue 8.

Ces diviseurs capacitifs sont chacun formés de deux éléments capacitifs 52 identiques disposés en série entre les bornes 4 et 6.

Avantageusement, chacun des éléments capacitifs 52 est monté en anti-parallèle avec une diode 54 destinée à limiter la tension globale présente aux bornes de l'onduleur 28, afin de le protéger des surtensions.
Par exemple, les éléments capacitifs 52 sont des condensateurs de 47 nano-Farads (nF) et les diodes 54 sont des diodes de type 30 ampères (A) BYT30P-1000.

Les diviseurs capacitifs 50₁ et 50₂ présentent chacun une borne intermédiaire d'alimentation 56₁ et 56₂ qui est à un potentiel moitié de la différence de potentiel présente entre la borne d'alimentation 6 et la borne de référence 4.

Enfin, l'onduleur 28 comporte des éléments inductifs 58₁ et 58₂ disposés chacun en série entre une borne intermédiaire d'alimentation 56 et une borne de sortie 36 d'une cellule de commutation 30, de sorte que l'élément inductif 58₁ est connecté entre la borne de sortie 36₁ et la borne intermédiaire d'alimentation 56₁ et, l'élément inductif 58₂ est relié en série entre la borne de sortie 36₂ et la borne intermédiaire d'alimentation 56₂

Ainsi que cela apparaîtra ultérieurement aux figures 3A à 3F, dans un tel circuit les éléments inductifs 58₁ et 58₂ forment éléments de résonance et participent à la création des conditions de commutation douce des interrupteurs 32.

Par ailleurs, l'élément inductif 42 est un élément facultatif destiné à la diminution des perturbations électromagnétiques, grâce à son influence sur les taux de montée et de descente des oscillations de tension au niveau du primaire.

Eventuellement, cet élément inductif 42 est formé par l'inductance de fuite du transformateur 40.

Le circuit de l'invention tel que décrit permet d'obtenir à l'aide d'une commande de fonctionnement à 100 KHz de type blocage commandé et amorçage spontané, une sortie à 50 volts de 0 à 500 ampères.

En effet, l'utilisation d'éléments inductifs 58 formant éléments de résonance disposés entre les bornes intermédiaires d'alimentation 56 et les bornes de sorties 36 des cellules de commutation 30 permet de créer les conditions d'amorçage spontané des interrupteurs 32 sans limite inférieure de courant.

Pour un fonctionnement à faible charge, l'énergie stockée dans l'inductance 42 n'est plus suffisante pour décharger complètement les condensateurs 34 mis en parallèle avec les interrupteurs 32. Ceux-ci ne peuvent donc pas s'amorcer spontanément en commutation douce. L'énergie supplémentaire est alors fournie par les inductances 58.

On va maintenant décrire le fonctionnement du circuit décrit en référence à la figure 2.

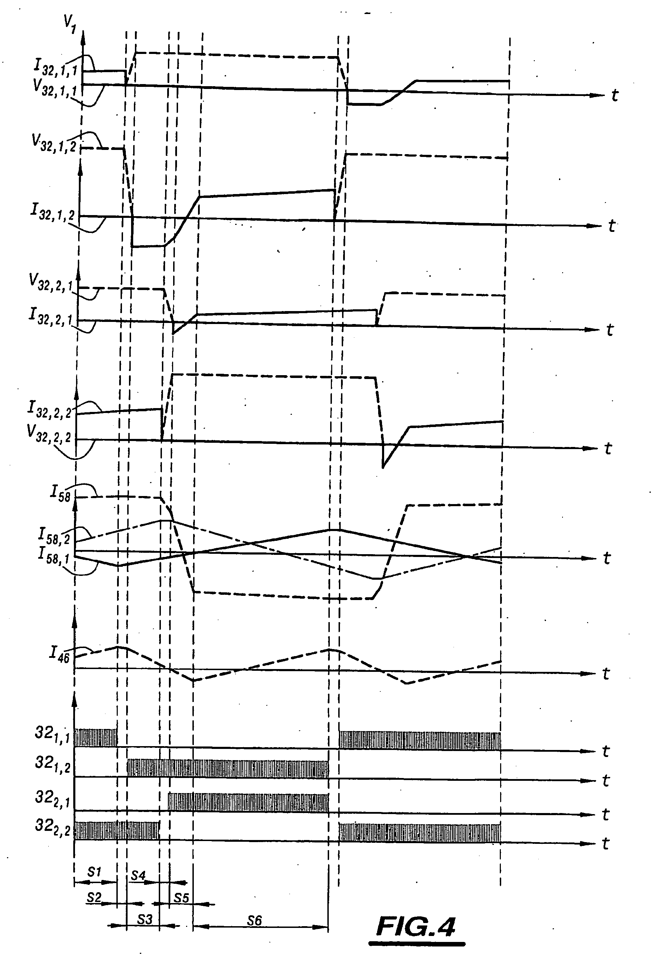

Le circuit de l'invention étant d'un fonctionnement symétrique, il va être décrit sur une demi-période en référence aux figures 3A à 3F sur lesquelles les parties du circuit dans lesquelles circule un courant apparaissent en surligné et à la figure 4, représentant un chronogramme des principaux signaux du circuit.

Sur le chronogramme de la figure 4, la tension et l'intensité aux bornes de différents composants sont représentées, référencées respectivement par les lettres V et I avec en indice le numéro du composant.

De plus, l'état de chacun des quatre interrupteurs 32 est également représenté sur le chronogramme de la figure 4, un état bloqué apparaissant sous la forme d'un trait et un état passant sous la forme d'une barre horizontale.

Le fonctionnement du circuit est décomposé selon six séquences marquées S1 à S6.

Au cours de la première séquence S1, on considère que les interrupteurs 32_{1,2}, et 32_{2,1} sont chacun dans un état de blocage c'est-à-dire voient une intensité nulle.

Inversement, les interrupteurs 32_{1,1}, 32₂,₂, sont dans un état d'amorçage, c'est-à-dire sont passants en courant et voient une tension nulle entre leurs électrodes de puissance.

Cette phase S₁ correspond à une phase active de transfert de puissance au cours de laquelle l'enroulement primaire du transformateur 40 voit une tension constante.

Le courant de l'interrupteur 32_{1,1} est la somme du courant de l'inductance présente dans le redresseur 44, ramené au primaire du transformateur 40 et du courant circulant dans la cellule de commutation 30₁.

Cette séquence prend fin au blocage de l'interrupteur 32_{1,1} suite à une commande émise par le dispositif 38.

Le circuit entre alors dans la seconde séquence de fonctionnement S2 au cours de laquelle les interrupteurs 32_{1,1}, 32_{1,2} et 32_{2,1}, sont commandés en blocage, tandis que l'interrupteur 32_{2,2} est passant.

La durée de la séquence S2 correspond au temps de charge et de décharge des condensateurs de résonance 34 associés aux interrupteurs.

En effet, comme l'interrupteur 32_{1,1} est bloqué, le courant circulant dans la cellule 30₁ commence à charger la capacité 34_{1,1} et en même temps, décharge la capacité 34_{1,2}.

Grâce à la capacité 34_{1,1}, la tension V_{32,1,1} aux bornes de l'interrupteur 32_{1,1} ne peut que croître lentement, permettant ainsi le blocage de l'interrupteur à zéro de tension dit ZVS (en anglais : Zero Voltage Switching).

Pendant ce temps, la capacité 34_{1,2} se décharge lentement au cours de cette phase et lorsqu'elle est complètement déchargée, la diode montée en anti-parallèle avec l'interrupteur 32_{1,2} se ferme spontanément permettant la continuité du courant.

La tension aux bornes de l'interrupteur 32_{1,2} est alors maintenue à zéro créant les conditions d'amorçage spontané en mode ZVS.

Au cours de la séquence S3, les interrupteurs 32_{1,1}, 32_{2,1} sont tous deux commandés en blocage tandis que les interrupteurs 32_{1,2} et 32_{2,2} sont passants, de sorte que l'enroulement primaire du transformateur 40 voit une tension nulle après l'annulation de la tension aux bornes de la capacité 34_{1,2}.

Les deux diodes du redresseur 44 sont alors passantes dans un mode dit de « roue libre » et le courant traversant le primaire du transformateur 40 est maintenu constant.

La durée de la séquence S3 est déterminée par la durée de déphasage nécessaire pour le réglage de puissance.

Au cours de la séquence S3, l'inductance 58₁ voit une tension positive et constante et un courant à croissance linéaire à partir de sa valeur minimale.

Le circuit entre ensuite dans la séquence S4 au début de laquelle l'interrupteur 32_{2,2} est commandé en blocage en mode ZVS, de sorte que les interrupteurs 32_{1,1}, 32_{2,1} et 32_{2,2} sont commandés en blocage, tandis que seul l'interrupteur 32_{1,2} est passant.

La durée de cette séquence de fonctionnement correspond au temps de charge et de décharge des condensateurs de résonance 34 de la cellule de commutation 30₂.

Ainsi, lorsque l'interrupteur 32_{2,2} est bloqué, le courant circulant au travers de l'inductance 58₂, atteint sa valeur de crête positive et, de manière similaire à la séquence 1, commence à charger le condensateur 34_{2,2} et à décharger le condensateur 34_{2,1}.

La tension aux bornes du condensateur 34_{2,2} commence à croître à partir de zéro tandis que celle aux bornes du condensateur 34_{2,1} commence à décroître.

Dès que la tension aux bornes du condensateur 34_{2,1} commence à décroître, le transformateur 40 voit une tension négative s'installer car l'interrupteur 32_{1,2} est déjà passant.

Grâce au condensateur 34_{2,2}, la tension V_{32,2,2} aux bornes de l'interrupteur 32_{2,2} ne peut que croître lentement assurant la commutation de blocage en mode ZVS.

La décharge progressive du condensateur 34_{2,1} ramène à zéro la tension aux bornes de l'interrupteur 32_{2,1} au cours de cet intervalle permettant ainsi son amorçage spontané en mode ZVS.

Au cours de cette phase, le courant circulant dans la cellule de commutation 30₂ est égal au courant circulant dans l'inductance 58₂ diminuée du courant de charge ramené au primaire du transformateur 40. Ce qui réduit donc les contraintes de courant appliquées sur l'interrupteur 32_{2,2} bloqué ainsi que le courant nécessaire pour décharger le condensateur 34_{2,1}.

Pour obtenir l'amorçage spontané de l'interrupteur 32_{2,1}, le condensateur 34_{2,1} doit être totalement déchargé pendant le temps de cette séquence S4 afin de permettre la commutation d'amorçage spontanée.

Le circuit entre ensuite dans la cinquième phase de fonctionnement notée S5 au début de laquelle l'interrupteur 32_{2,1} s'amorce de manière spontanée en mode ZVS, de sorte que les interrupteurs 32_{1,1} et 32_{2,2} sont commandés en blocage, tandis que les interrupteurs 32_{1,2} et 32_{2,1} sont passants.

Comme l'interrupteur 32_{2,1} est passant, l'inductance 58₂ voit une tension négative constante, de sorte que le courant commence à décroître linéairement à ses bornes.

Cette séquence S5 prend fin au blocage de la première diode du redresseur 44.

Le circuit débute ensuite une sixième séquence de fonctionnement S6, au cours de laquelle les interrupteurs 32_{1,2}, 32_{2,1} sont passants, tandis que les autres sont bloqués et la première diode du redresseur 44 est bloquée tandis que la seconde est passante. Cette séquence est symétrique à la séquence S1 et constitue le début d'un autre demi-cycle de fonctionnement symétrique aux séquences de fonctionnement précédentes.
L'ensemble des six séquences de fonctionnement forme ainsi un cycle complet de fonctionnement de ce circuit.

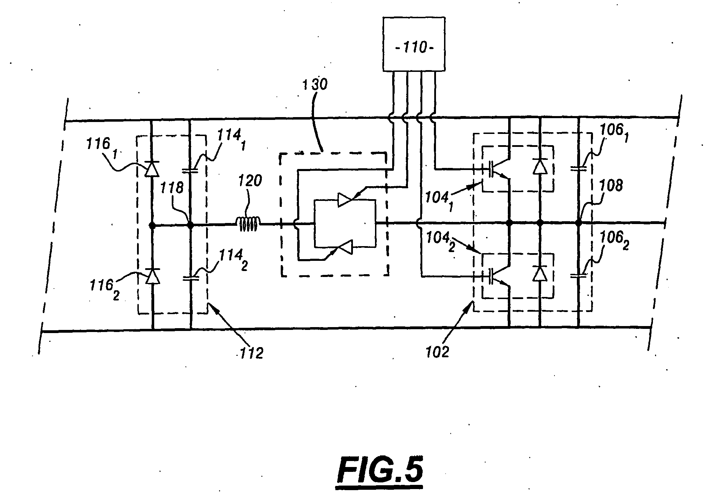

Sur la figure 5, on a représenté une variante d'une partie du circuit.

Dans ce mode de réalisation, un montage tête-bêche de deux thyristors à gâchettes 130 est relié en série entre l'élément inductif 120 et la borne de sortie 108.

Ces thyristors 130 sont commandés directement par le dispositif de commande 110 ou par un autre dispositif de même nature et reçoivent des signaux spécifiques de commande réalisés de manière classique.

Dans le circuit décrit en référence à la figure 5, le dispositif de commande 110 fournit un courant permanent pour la commande des interrupteurs 104. Grâce à l'adjonction des thyristors 130, ces commandes ne sont plus nécessaires que lors des phases de commutation ce qui permet de limiter le courant total circulant dans le circuit.

L'utilisation d'un tel circuit permet de remplacer les signaux de commande de type triangulaire par de simples impulsions aux instants de commutation.

Bien entendu, ce montage peut être utilisé dans le circuit décrit en référence à la figure 2 en insérant entre chaque borne intermédiaire d'alimentation et chaque borne de sortie d'une cellule de commutation, un ensemble de deux thyristors à gâchette en montage série tête-bêche.

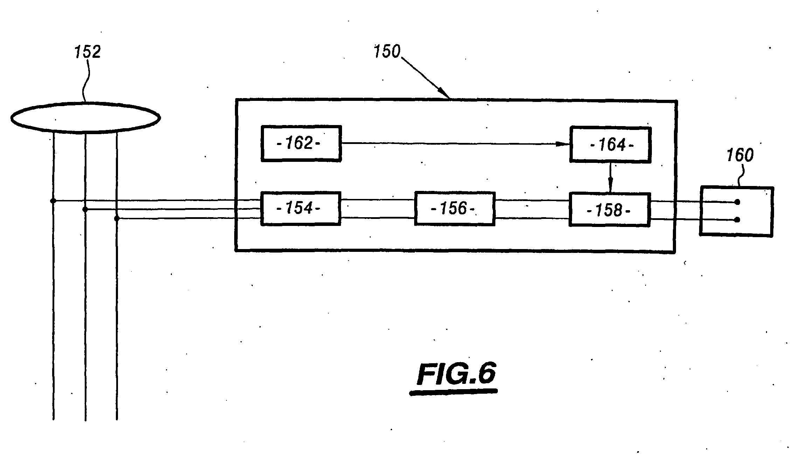

En référence à la figure 6, on va maintenant décrire un poste de soudage à onduleur selon l'invention.

Le poste de soudage 150 est relié à un réseaude transfert d'énergie électrique tel qu'un réseau triphasé 152. L'énergie reçue provenant du réseau triphasé 152 est reçue tout d'abord dans des moyens d'isolation tels que, par exemple, un transformateur 154 réalisant une isolation galvanique entre le poste de soudage 150 et le réseau triphasé 152.

Le transformateur 154 délivre un signal alternatif de puissance à un redresseur 156 formant source de tension continue auquel vient se raccorder un onduleur 158 correspondant par exemple à l'onduleur 28 tel que décrit en référence à la figure 2 ou encore à l'onduleur 100 tel que décrit en référence à la figure 4. Le transformateur 154, le redresseur 156 et l'onduleur 158 ainsi combinés forment un convertisseur de puissance entre une source de tension alternative et une source de tension continue et réciproquement.

Les bornes de sortie de l'onduleur 158 sont raccordées à des bornes de soudage 160 formant les bornes de soudage pour la réalisation d'une soudure à l'arc.

Par ailleurs, le poste de soudage 150 comporte également des moyens 162 d'entrée d'une consigne pour le soudage. Cette consigne est transmise à un dispositif de commande 164 correspondant au dispositif de commande 38 décrit en référence à la figure 2 ou au dispositif de commande 110 décrit en référence à la figure 4. Le dispositif de commande 164 délivre enfin des signaux de commande à l'onduleur 158 pour la formation d'un signal de sortie aux bornes 160, correspondant à la consigne.

Bien entendu, différents types de commandes et de consignes peuvent être envisagés en fonction des applications souhaitées. Notamment on peut utiliser l'onduleur de l'invention dans un poste de soudage à commande à rapport cyclique variable ou à déphasage.

Par ailleurs, les composants utilisés dans l'onduleur peuvent être réalisés de plusieurs manières différentes. Notamment, les interrupteurs peuvent être formés de manière classique d'un ou plusieurs transistors ou MOSFET identiques placés en série, de sorte que les interrupteurs dans leur ensemble sont unidirectionnels en tension et bidirectionnels en courant et sont formés de composants électroniques unidirectionnels en tension et unidirectionnels en courant.

Les éléments capacitifs peuvent être formés de plusieurs condensateurs disposés en parallèle, et les éléments inductifs de plusieurs inductances connectées en série. Le nombre et la nature de chacun des composants électroniques utilisés, varient en fonction de la tension maximale et du courant maximal applicables entre les bornes de chaque ininterrupteur.

Par ailleurs, différents composants électroniques peuvent être cumulés, un même composant remplissant plusieurs fonctions. Notamment, les éléments capacitifs d'aide à la commutation peuvent être confondus avec les éléments capacitifs des diviseurs capacitifs. Le dimensionnement de tels composants doit toutefois tenir compte des contraintes imposées par les différentes fonctions.

Dans les modes de réalisation décrits, les bornes intermédiaires d'alimentation sont obtenues à l'aide de diviseurs capacitifs réalisés de manière classique.
Cependant, ces bornes peuvent être directement disponibles au niveau de la source de tension continue sans nécessiter de diviseur capacitif, les bornes intermédiaires d'alimentation étant alors simplement formées de bornes de raccordement. Un tel mode de réalisation est particulièrement adapté dans le cas où la source de tension continue est formée d'une pluralité de batteries disposées en série dont plusieurs bornes de tensions intermédiaires sont accessibles.

Enfin, bien que l'invention ait été décrite dans le cadre d'un poste de soudage, il est également possible d'utiliser l'onduleur de l'invention dans d'autres domaines d'applications, tels que par exemple la charge de batteries rechargeables ou les alimentations stabilisées courantes.

Le poste de l'invention présente donc un nombre important d'avantages par rapport aux poste à onduleurs à résonance ou à blocage commandé, et notamment :
- les contraintes sur les composants sont minimales, l'énergie de résonance mise en jeu étant très faible par rapport à l'énergie totale du système ;
- les circuits d'aide à la commutation sont simples voire inexistantes ;
- le coût global du circuit est considérablement réduit ; et
- la plage fonctionnelle du courant de sortie est étendue.

## Revendications

1. Poste de soudage à onduleur, **caractérisé en ce qu'**il comporte un onduleur de type quasi résonnant à commutation douce comportant :
- des moyens (4, 6) de raccordement à une source d'alimentation (8) en énergie électrique comportant une borne d'alimentation (6) en tension continue et une borne de référence (4),
- deux cellules de commutation (30 ; 102) de type quasi résonnant et comportant un nombre pair d'interrupteurs (32 ; 104) connectés en série entre lesdites bornes d'alimentation et de référence (4, 6) et comportant une borne de sortie (36 ; 108) prise entre les deux interrupteurs centraux de ladite cellule (30 ; 102), chaque interrupteur (32 ; 104) étant connecté en parallèle à un élément capacitif (34 ; 106) et en série à un élément inductif (58 ; 120) formant les éléments de résonance, et
- des moyens de raccordement à un circuit de commande (38 ; 110) desdits interrupteurs (32 ; 104) et un transformateur (40) dont l'élément primaire est relié aux bornes de sortie (38 ; 108) des cellules de commutation (30 ; 102) et dont le secondaire est relié et à un redresseur (44) délivrant une tension continue de sortie d'onduleur, et
- deux diviseurs capacitifs (50; 112) formés d'un nombre pair d'éléments capacitifs (52; 114) disposés en série entre lesdites bornes d'alimentation (6) et de référence (4), chaque diviseur capacitif (50; 112) comportant une bonne prise entre les deux élément capacitifs centraux et formant une borne intermédiaire d'alimentation (56 ; 118) prise à un potentiel moitié de la différence de potentiel présente entre lesdites bornes d'alimentation en tension continue (6) et de référence (4), la borne de sortie (36 ; 108) de chaque cellule de commutation (30 ; 102) étant reliée à une borne intermédiaire d'alimentation (56 ; 118) par l'intermédiaire de l' élément inductif (58 ; 120) connecté en série, et
- des diodes (54 ; 116) montées en parallèle avec chaque élément capacitif (52 ; 114) des diviseurs capacitifs (50; 112).

2. Poste selon la revendication 1, **caractérisé en ce que** l'onduleur comporte deux cellules de commutation (30₁, 30₂) disposées en parallèle, la borne de sortie (36₁, 36₂) de chacune desdites deux cellules (30₁, 30₂) étant reliée chacune à une borne intermédiaire d'alimentation (56₁, 56₂) par l'intermédiaire d'un élément inductif distinct (58₁, 58₂), et ledit élément primaire dudit transformateur (40) étant relié en série entre lesdites deux bornes de sortie (36₁, 36₂) desdites deux cellules de commutation (30₁, 30₂).

3. Poste selon la revendication 2, **caractérisé en ce que** l'onduleur comporte deux bornes intermédiaires d'alimentation (56₁, 56₂) chacune reliée à une borne de sortie (36₁, 36₂) d'une cellule de commutation (30₁, 30₂) par un élément inductif distinct (58₁, 58₂).

4. Poste selon l'une quelconque des revendications 1 à 3, **caractérisé en ce qu'**un montage tête-bêche de deux thyristors à gâchette (130) est disposé en série avec ledit élément inductif (58 ; 120) entre chaque borne intermédiaire d'alimentation (56 ; 118) et chaque borne de sortie (36 ; 108) d'une cellule de commutation (30 ; 102), ledit onduleur (28 ; 100) étant également relié à un dispositif de commande (38 ; 110) desdits thyristors à gâchette (130).

5. Poste selon l'une quelconque des revendications 1 à 4, **caractérisé en ce que** l'onduleur comprend un élément inductif (42) disposé en série avec le primaire dudit transformateur (40).

6. Poste selon l'une quelconque des revendications 1 à 5, **caractérisé en ce que** ledit transformateur (40) est un transformateur planar couplé comprenant deux éléments en série au primaire et deux éléments en parallèle au secondaire.

7. Poste selon l'une quelconque des revendications 1 à 6, **caractérisé en ce qu'**il comporte une source de tension continue (154, 156) à laquelle est relié un onduleur (158) dont les bornes de sortie (160) forment bornes de soudage, ledit poste comportant également des moyens (162) d'entrée d'une consigne de soudage et des moyens (164) de commande dudit onduleur (158).

## Claims

1. Welding set with inverter, **characterized in that** it comprises a quasi-resonant soft-switching type inverter, comprising:
- means (4, 6) of connection to an electrical energy power source (8) including a DC voltage power supply terminal (6) and a reference terminal (4) ,
- two quasi-resonant type switching legs (30; 102) comprising an even number of switches (32; 104) connected in series between said power supply and reference terminals (4, 6) and including an output terminal (36; 108) taken between the two central switches of said leg (30; 102), each switch (32; 104) being connected in parallel to a capacitive element (34; 106) and in series to an inductive element (58; 120) forming resonance elements, and
- means of connection to a circuit (38; 110) controlling said switches (32; 104) and a transformer (40), the primary element of which is linked to said output terminals (36; 108) of the switching legs (30; 102) and the secondary of which is linked to a rectifier (44) delivering a DC inverter output voltage, and two capacitive dividers (50; 112) made up of an even number of capacitive elements (52; 114) arranged in series between said power supply (6) and reference (4) terminals, each capacitive divider (50; 112) comprising a terminal taken between the two central capacitive elements and forming an intermediate power supply terminal (56; 118) taken at a potential of half the potential difference present between said DC voltage power supply (6) and reference (4) terminals, the output terminal (36; 108) of each switching leg (30; 102) being linked to an intermediate power supply terminal (56; 118) via an inductive element (58; 120) connected in series, and
- diodes (54, 116) mounted in parallel with each capacitive element (52, 114) of the capacitive dividers (50; 112).

2. Set according to Claim 1, **characterized in that** the inverter comprises two switching legs (30₁, 30₂) arranged in parallel, the output terminal (36₁, 36₂) of each of said two legs (30₁, 30₂) each being linked to an intermediate power supply terminal (56₁, 56₂) via a separate inductive element (58₁, 58₂) , and said primary element of said transformer (40) being linked in series between said two output terminals (36₁, 36₂) of said two switching legs (30₁, 30₂).

3. Set according to Claim 2, **characterized in that** the inverter comprises two intermediate power supply terminals (56₁, 56₂) each linked to an output terminal (36₁, 36₂) of a switching leg (30₁, 30₂) via a separate inductive element (58₁, 58₂) .

4. Set according to any one of Claims 1 to 3, **characterized in that** a head-to-tail configuration of two gated thyristors (130) is arranged in series with said inductive element (58; 120) between each intermediate power supply terminal (56; 118) and each output terminal (36; 108) of a switching leg (30; 102), said inverter (28; 100) also being linked to a device (38; 110) controlling said gated thyristors (130).

5. Set according to any one of Claims 1 to 4, **characterized in that** the inverter comprises an inductive element (42) arranged in series with the primary of said transformer (40).

6. Set according to any one of Claims 1 to 5, **characterized in that** said transformer (40) is a coupled planar transformer comprising two elements in series in the primary and two elements in parallel in the secondary.

7. Set according to any one of Claims 1 to 6, **characterized in that** it comprises a DC voltage source (154, 156) to which is linked an inverter (158), the output terminals (160) of which form welding terminals, said set also comprising means (162) of entering a welding set point and means (164) of controlling said inverter (158).

## Patentansprüche

1. Schweißstation mit einem Wechselrichter, **dadurch gekennzeichnet, dass** sie einen sanftschaltenden quasiresonanten Wechselrichter enthält, umfassend:
- Mittel (4, 6) zum Anschluss an eine Quelle (8) zur Versorgung mit elektrischer Energie, die einen Gleichspannungsversorgungsanschluss (6) und einen Referenzanschluss (4) umfasst,
- zwei quasiresonante Schaltzellen (30; 102), die eine gerade Anzahl von Schaltern (32; 104) enthalten, die zwischen dem Versorgungs und dem Referenzanschluss (4, 6) in Reihe geschaltet sind, und einen Ausgangsanschluss (36; 108) enthalten, der zwischen den beiden mittleren Schaltern der Zelle (30; 102) liegt, wobei jeder Schalter (32; 104) parallel zu einem kapazitiven Element (34; 106) und in Reihe mit einem induktiven Element (58; 120) geschaltet ist, die die Resonanzelemente bilden, und
- Mittel zum Anschluss der Schalter (32; 104) an eine Steuerschaltung (38; 110) und einen Transformator (40), dessen Primärelement mit den Ausgangsanschlüssen (38; 108) der Schaltzellen (30; 102) verbunden ist und dessen Sekundärelement mit einem Gleichrichter (44) verbunden ist, der eine Wechselrichterausgangsgleichspannung liefert, und
- zwei kapazitive Teiler (50; 112), die durch eine gerade Anzahl von kapazitiven Elementen (52; 114) gebildet werden, welche zwischen dem Versorgungsanschluss (6) und dem Referenzanschluss (4) in Reihe angeordnet sind, wobei jeder kapazitive Teiler (50; 112) einen Anschluss aufweist, der zwischen den beiden mittleren kapazitiven Elementen angeordnet ist und einen Versorgungszwischenanschluss (56; 118) bildet, der auf einem Spannungspotential liegt, das die Hälfte der Differenz des Spannungspotentials aufweist, das zwischen dem Gleichspannungsversorgungsanschluss (6) und dem Referenzanschluss (4) liegt, wobei der Ausgangsanschluss (36; 108) jeder Schaltzelle (30; 102) mittels des induktiven Elements (58; 120) mit einem in Reihe geschalteten Zwischenversorgungsanschluss (56; 118) verbunden ist, und
- Dioden (54; 116), die parallel zu jedem kapazitiven Element (52; 114) der kapazitiven Teiler (50; 112) angebracht sind.

2. Station nach Anspruch 1, **dadurch gekennzeichnet, dass** der Wechselrichter zwei Schaltzellen (30₁, 30₂) aufweist, die parallel angeordnet sind, wobei der Ausgangsanschluss (36₁, 36₂) jeder der beiden Zellen (30₁, 30₂) mittels eines verschiedenen induktiven Elements (58₁, 58₂) jeweils mit einem Versorgungszwischenanschluss (56₁, 56₂) verbunden ist und das Primärelement des Transformators (40) zwischen den beiden Ausgangsanschlüssen (36₁, 36₂) der beiden Schaltzellen (30₁, 30₂) in Reihe geschaltet ist.

3. Station nach Anspruch 2, **dadurch gekennzeichnet, dass** der Wechselrichter zwei Versorgungszwischenanschlüsse (56₁, 56₂) aufweist, die jeweils durch ein verschiedenes induktives Element (58₁, 58₂) mit einem Ausgangsanschluss (36₁, 36₂) verbunden sind.

4. Station nach einem der Ansprüche 1 bis 3, **dadurch gekennzeichnet, dass** eine entgegengesetzte Montage von zwei Gatter-Thyristoren (130) in Reihe mit dem induktiven Element (58; 120) zwischen jedem Versorgungszwischenanschluss (56; 118) und jedem Ausgangsanschluss (36; 108) einer Schaltzelle (30; 102) angeordnet ist,
wobei der Wechselrichter (28; 100) ebenfalls mit einer Steuerschaltung (38; 110) der Gatter-Thyristoren (130) verbunden ist.

5. Station nach einem der Ansprüche 1 bis 4, **dadurch gekennzeichnet, dass** der Wechselrichter ein induktives Element (42) enthält, das in Reihe mit dem Primärelement des Transformators (40) angeordnet ist.

6. Station nach einem der Ansprüche 1 bis 5, **dadurch gekennzeichnet, dass** es sich bei dem Transformator (40) um einen Planarkoppeltransformator mit zwei in Reihe geschalteten Elementen in dem Primärelement und zwei parallel geschalteten Elementen in dem Sekundärelement handelt.

7. Station nach einem der Ansprüche 1 bis 6, **dadurch gekennzeichnet, dass** sie eine Gleichspannungsquelle (154, 156) enthält, mit der ein Wechselrichter (158) verbunden ist, dessen Ausgangsanschlüsse (160) Schweißanschlüsse bilden, wobei die Station des Weiteren Mittel (162) zur Eingabe eines Schweißsollwerts und Mittel (164) zur Steuerung des Wechselrichters (158) aufweist.
